# EUROPEAN PATENT SPECIFICATION

(11) **EP 1 419 113 B1**
(45) Date of publication and mention of the grant of the patent: **07.05.2008**
(21) Application number: 02753145.8
(22) Date of filing: 21.08.2002
(51) Int. Cl.: C02F 9/00, C02F 1/32, B01D 24/12

(54) **FILTER ASSEMBLIES WITH COMPRESSIBLE FILTERING MEDIUM**
FILTERVORRICHTUNGEN MIT KOMPRESSIBLEM FILTERMEDIUM
ENSEMBLES FILTRES POURVUS D'UN MATERIAU FILTRANT COMPRESSIBLE

(30) Priority: 23.08.2001 GB 1202525
(43) Date of publication of application: 19.05.2004
(73) Proprietor: Hozelock Limited, Aylesbury, Buckinghamshire HP19 8SU (GB)
(72) Inventor: CLARK, Paul, Haddenham, Buckinghamshire HP17 8JD (GB)
(74) Representative: Faulkner, Thomas John
(86) International application number: PCT/GB2002/003855
(87) International publication number: WO 2003/018486

(56) References cited:
- EP-A- 0 899 237
- EP-A- 1 068 888
- US-A- 4 303 533
- US-A- 5 690 825

## Description

This invention relates to filter assemblies for filtering water, for example pond or aquaria water.

EP 1068 and EP 0 999 237 both describe pond filters in which open-cell foam is provided as a filter medium. The filter medium provided in an inlet chamber such that water flows through the filter medium before eating the inlet chamber via an outlet
According to the invention there is provided a filter assembly for filtering a flow of water, the assembly comprising a container enclosing an inlet chamber with an upstream region and a downstream outlet, and a filter medium in a water flow path between the upstream region and the downstream outlet, wherein the filter medium is elastically compressible, characterised in that the inlet chamber, filter medium and outlet are arranged so that an increase in water pressure in the upstream region as a consequence of clogging of the filter medium causes the filter medium to be compressed in a movement relative to the outlet which tends to allow an increase water flow rate through the outlet so as to counter the reduction in water flow rate caused by the clogging, and in that the filter assembly includes a source of ultra-violet radiation to which the flow of water is exposed after passage through the outlet and the assembly includes a compartment, downstream of the outlet and upstream of the ultra-violet source, accommodating plastic granules for attracting bacteria so as to provide biological treatment of the water.

Preferably the filter medium comprises a plurality of bodies of open-celled foam material, with the bodies being of decreasing cell size, and therefore decreasing coarseness, in the direction of the water flow path so that as clogging progresses the movement of the filter medium causes a greater proportionate area of the coarser foam material to be presented to the outlet. In one preferred embodiment, there are two bodies of foam material which abut along an interface, die movement of the filter medium on clogging causing this interface to move with respect to the outlet so that progressively more of the coarser foam body is presented to the outlet. Thus, as clogging progresses, the water flow path passes through in one of the low resistance paths presented by the coarser foam material

Preferably, the inlet chamber is annular, the filter medium is annular and the outlet is formed in a central tubular body surrounded by the filter medium. The tubular body may have a plurality of circumferentially spaced slots constituting the outlet.

Devices helpful in understanding the invention will now be described, by way of example, with reference to the accompanying drawings, in which:
**Figure 1** is an isometric view of a first filter assembly useful in understanding the invention,
**Figure 2** is a sectional view, on a central plane, of the filter assembly of Figure 1,
**Figures 3, 4** and **5** are sectional views, on an enlarged scale, of the circled area of Figure 2, showing three successive stages in the condition of a foam filter medium of the assembly of Figures 1 and 2,
**Figure 6** is an isometric view of the second filter assembly useful in understanding the invention
**Figure 7** is a sectional view, on a central plane, of the filter assembly of Figure 6,
**Figures 8****,** **9** and **10** are sectional views, on an enlarged scale, of the circled area of Figure 7, showing three successive stages in the condition of a foam filter medium,
**Figure 11** shows a modification of the filter assembly of Figures 1 and 2, and
**Figure 12** shows an embodiment of the invention which is a modification of the filter assembly of Figures 6 and 7, and
**Figure 13** is an isometric view of a third filter assembly useful in understanding the invention.

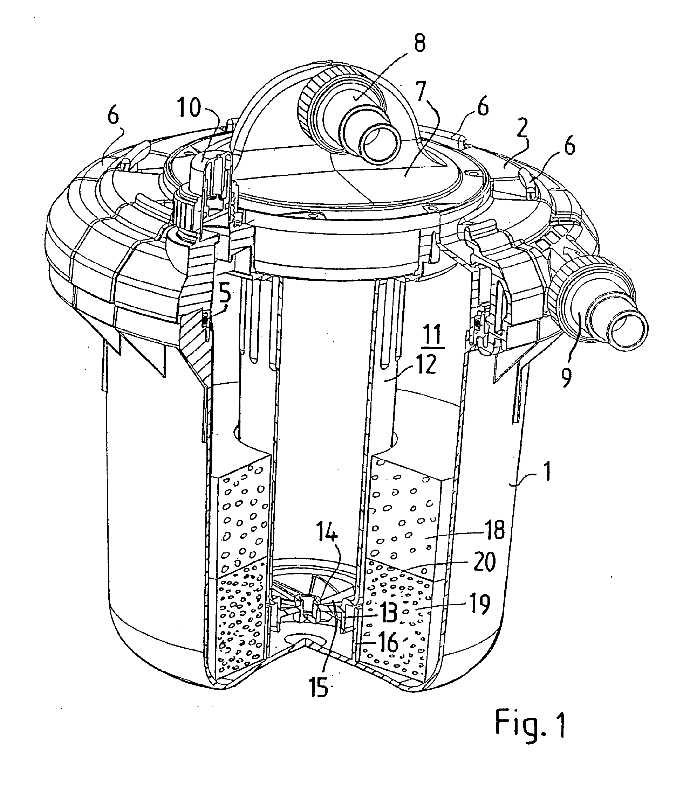

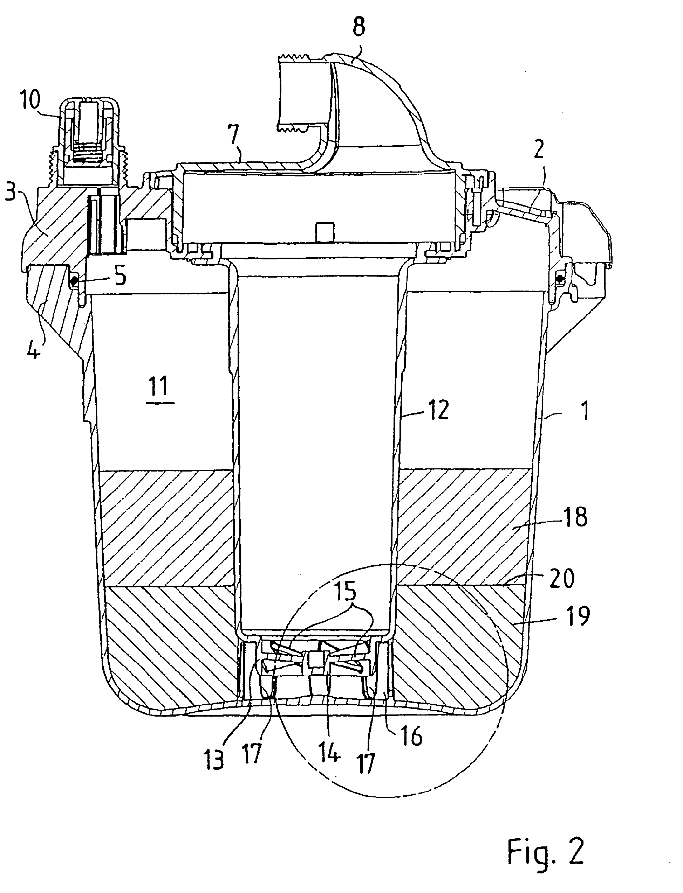

Referring principally to Figures 1 and 2, the filter assembly comprises a container formed by a plastics body 1 the upper end of which is closed by a plastics lid 2. The body and lid 2 have respective external flanges 3, 4 which make sealing engagement with the aid of an intervening O-ring 5. The flanges 3, 4 are detachably clamped together by a series of circumferentially spaced toggle clamps 6. This enables the lid 2 to be removed from the body 1 or to be replaced and sealed thereon. The lid 2 supports a central housing 7 carrying a moulded outlet duct 8. The lid 2 has an integrally moulded inlet duct 9 which admits water to an inlet chamber 11 of the container in a tangential direction. The lid 2 also carries a valve 10 which may serve as a safety valve or an indicator valve to indicate when pressure in the inlet chamber 11 exceeds a predetermined threshold. The housing 7 is shown in different angular positions in Figures 1 and 2, although the housing 7 is normally fixed in angular position with respect to the body 1.

Depending from the lid 12 is a central hollow tube 12 the lower end of which terminates in an open end defined by a reduced diameter skirt 13 surrounding a central hub 14 connected to the skirt 13 by a plurality of circumferentially spaced angled vanes 15 having spaces therebetween. The lower end of the tube 12 projects downwardly into the circular region defined by an annular wall 16 projecting upwardly from the base of the body 1. The annular wall 16 is formed with a plurality of circumferentially spaced vertical slots 17 which define an outlet for the chamber 11. Between an upstream region of the chamber 11 and the slots 17 are disposed two layers 18, 19 (or any convenient number of layers) of filter material each in the form of an annular body of open-celled plastics foam material which is elastically or resiliently compressible. The upper layer 18 is coarser than the lower layer 19, i.e. the upper layer 18 has larger cells at a larger spacing than the lower layer 19.

In use, a supply of the water to be filtered is pumped (e.g. from a garden pond) into the inlet duct 9 and an outlet pipe for the delivery of filtered water is attached to the outlet duct 8. The inlet duct 9 causes the incoming flow of water to enter the upstream region of the inlet chamber 11 in a tangential direction and the resulting swirling or vortex movement causes any large particles in the water flow to be deposited in the inlet chamber. The water then passes downwardly through the upper filter layer 18 and then the lower filter layer 19, before passing through the slots 17 and thence through the spaces between the angled vanes 15 so as to reach the inside of the tube 12 and the outlet duct 8. The angled vanes 15 impart a rotational or swirling movement to the water as it passes upwardly through the tube 12.

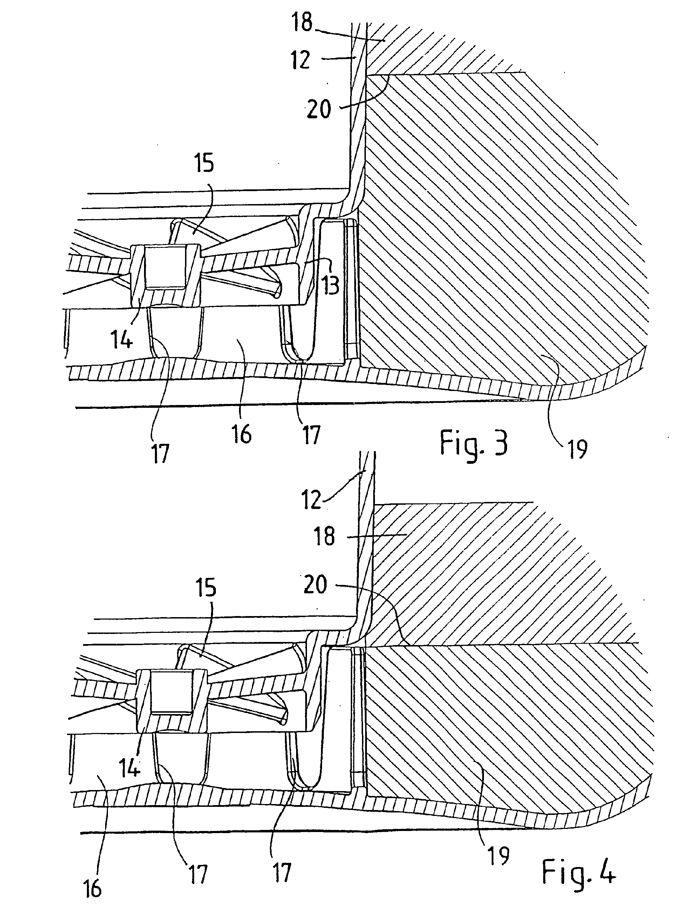

Initially, both layers 18, 19 of foam are in a clean condition and the interface 20 between the foam layers is positioned as illustrated in Figures 1, 2 and 3. After a period of use, the filter medium starts to become clogged and the lower filter layer 19 tends to clog before the upper filter layer 18 because the lower filter layer 19 is finer. This initial clogging causes the pressure in the upstream region of the inlet chamber to increase and this pressure bears on the upper surface of the upper foam layer 18 and compresses both foam layers 18, 19 so that the interface 20 between the foam layers is lowered, as illustrated in Figure 4. The compression of the foam layers 18, 19 exposes proportionately more of the coarser upper layer 18 to the slots 17 and tends to increase the water flow rate through the slots 17 so as to counter the reduction in water flow rate caused by the progressive clogging. Thus, the compression of the filter medium compensates, to some extent, for the reduction in flow rate caused by the clogging.

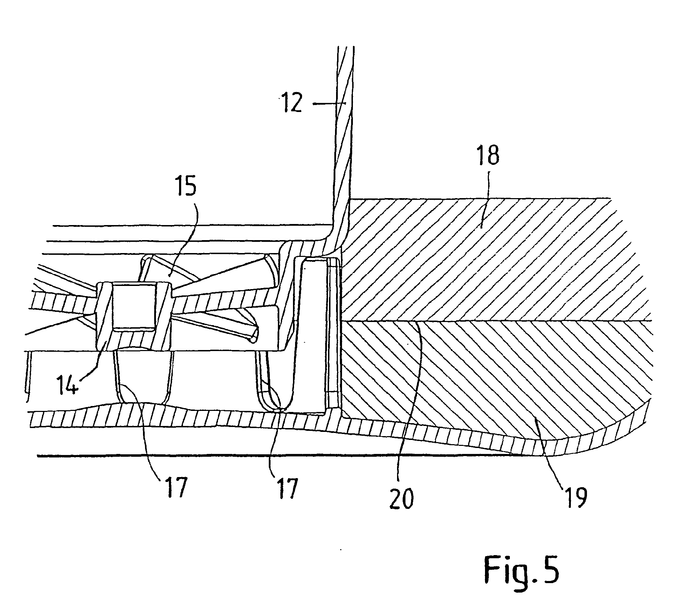

As clogging proceeds, the filter medium becomes further compressed and Figure 5 illustrates how the interface 20 between the foam layers 18, 19 has moved downwardly across the upper part of the faces of the slots 17 so as to increase the by-pass effect which, as before, counters the reduction in water flow rate caused by the clogging. The attainment of a maximum working threshold pressure in the inlet chamber 11 may be indicated by the valve 10, to indicate to the user that the filter medium requires cleaning.

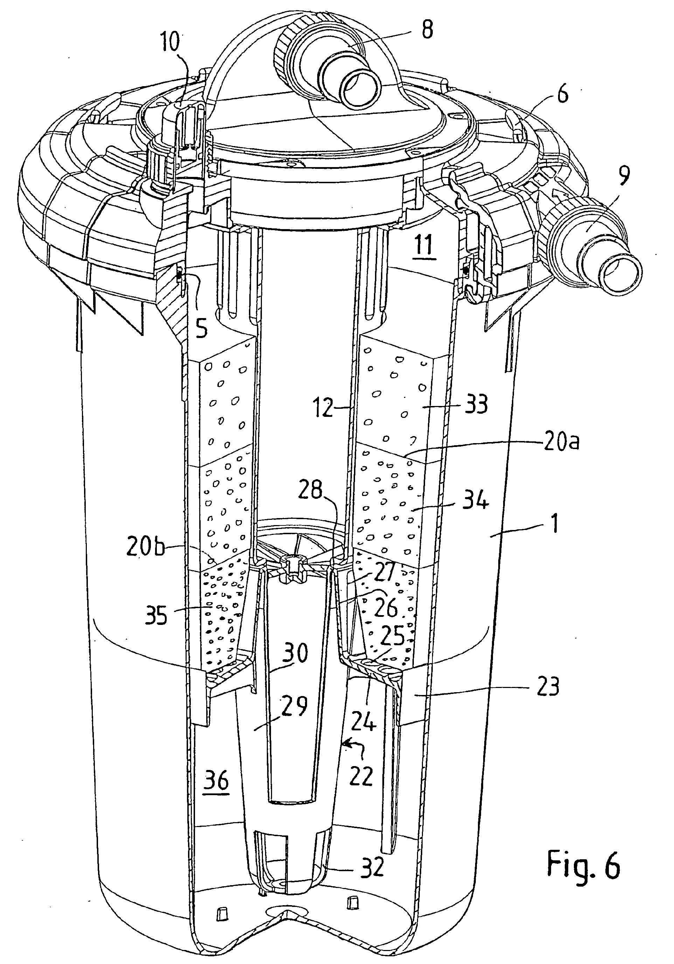

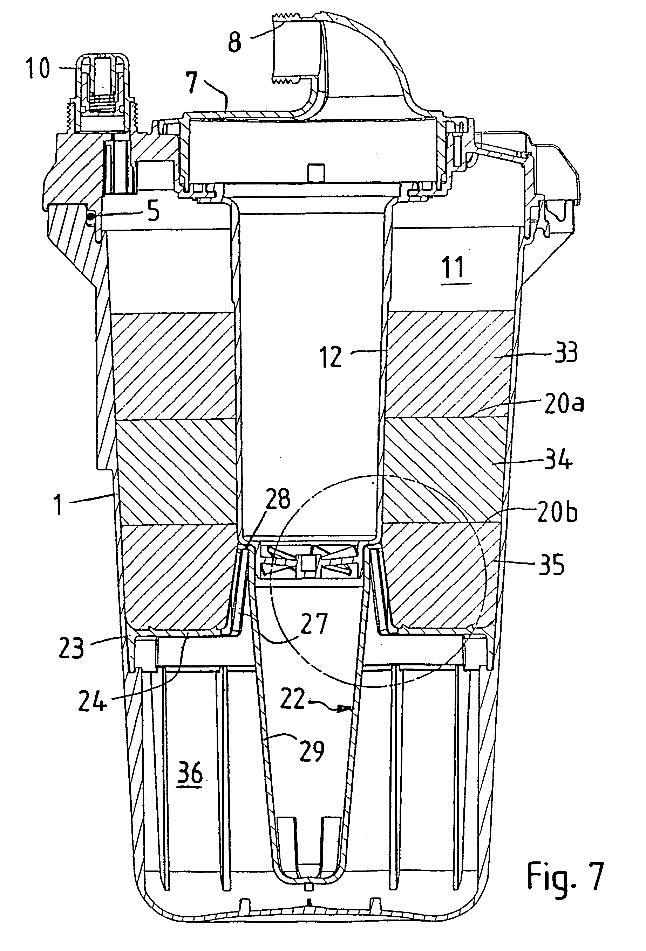

Figure 6 corresponds to Figure 1 but shows a second filter assembly having a larger capacity container. Similar parts in all the Figures bear the same reference numerals. The assembly of Figures 6 and 7 incorporates an internal support body 22 having an external flange 23 attached to the body 1, a radial wall 24 having circular apertures 25 therein, an upwardly converging frusto-conical wall 26 which is formed with elongated slots 27, an annular ridge 28 and a downwardly converging frusto-conical portion 29 formed with a series of larger slots 30 and a series of smaller slots 32 at its extreme lower end. There are three layers 33, 34, 35 of foam of progressively decreasing coarseness in a downwards direction. The two interfaces are referenced 20a and 20b, the lower layer 35 resting on the wall 24 and, at its radially inner annular surface, abutting the wall 26.

In use, the volume of the container between the lower part of the body 1 and the support body 22 defines a compartment 36 which is filled, or substantially filled, by plastics granules (not shown) having a high surface to volume ratio. The lid 2 is applied to the body 1 and sealed thereon. As before, a supply of water to be filtered is pumped into the inlet duct 9 and an outlet pipe for the delivery of filtered water is attached to the outlet duct 8. The incoming water enters the inlet chamber 11, passes through the three layers 33, 34, 35 of foam material and thence through the slots 27 which form the downstream outlet of the chamber 11. Water also passes through the apertures 25. The water then passes through the compartment 36 where it is subjected to biological treatment as a result of the build-up of bacteria on the plastics granules. Thereafter, the water passes through the slots 30, 32, passes upwardly within the tube 12 and leaves the assembly through the outlet duct 8.

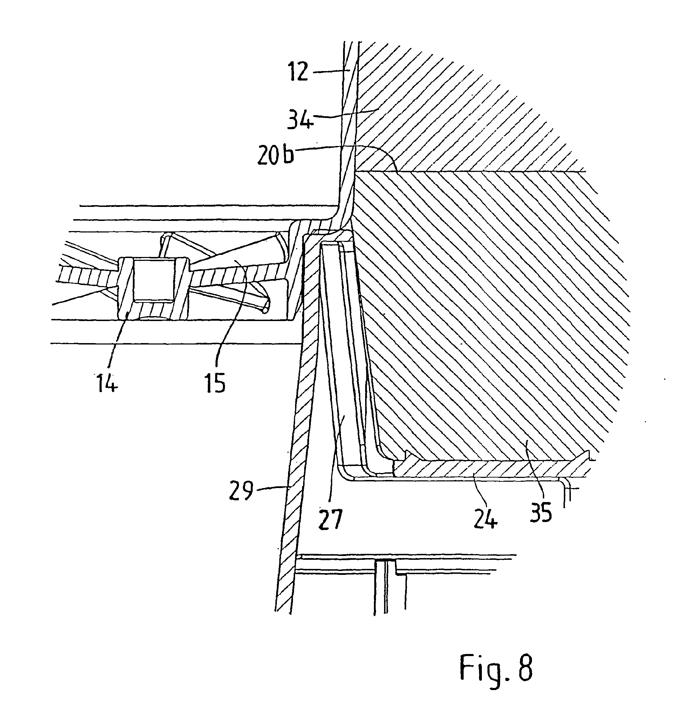

Figure 8 (corresponding to Figure 3), shows the interface 20b between the lower foam layer 35 and the intermediate foam layer 34 when the foam is in a clean condition.

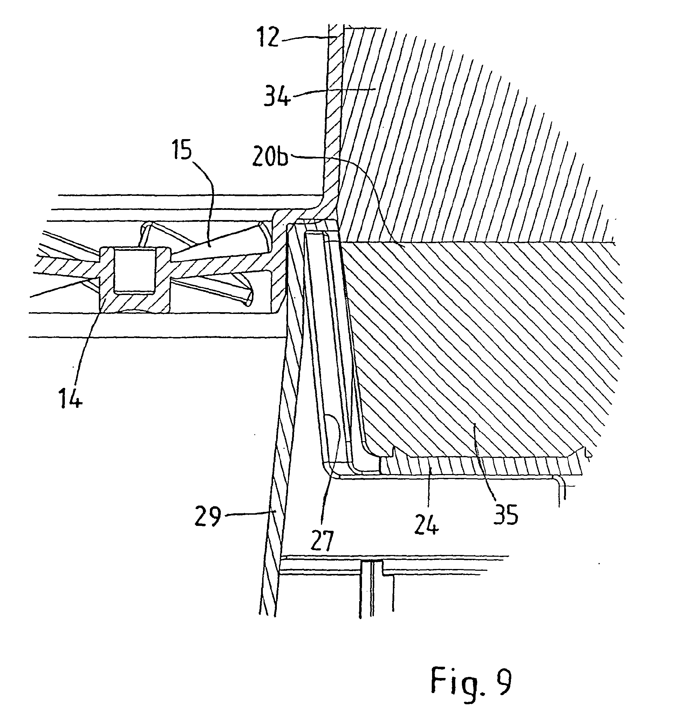

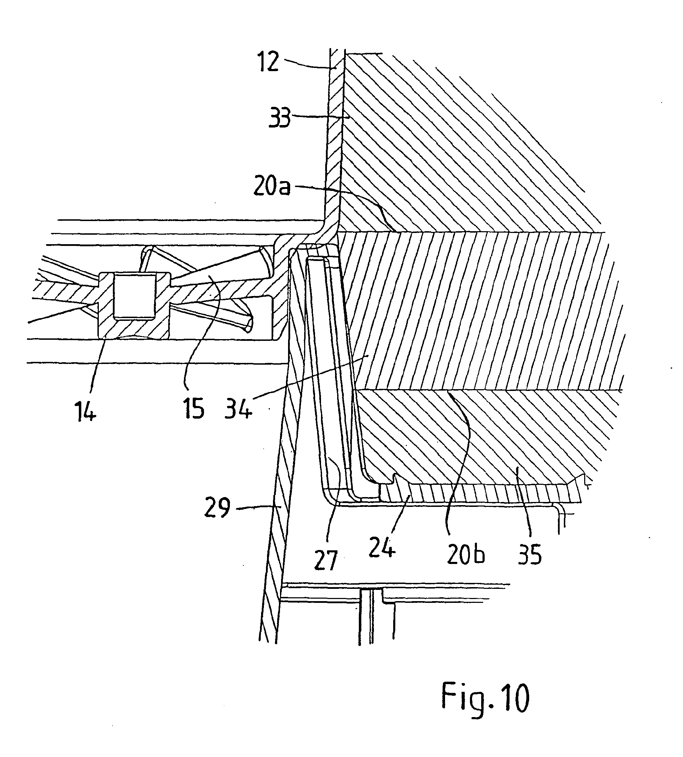

As the foam layers start to clog, the increase in pressure in the inlet chamber 11 causes the filter layers to be compressed so that the interface 20b moves to the position shown in Figure 9 which corresponds to Figure 4. After further use and further clogging, the filter layers 33, 34, 35 are further compressed as shown in Figure 10 which illustrates the slots 27 fully open to the resistance path presented by the coarser layer.

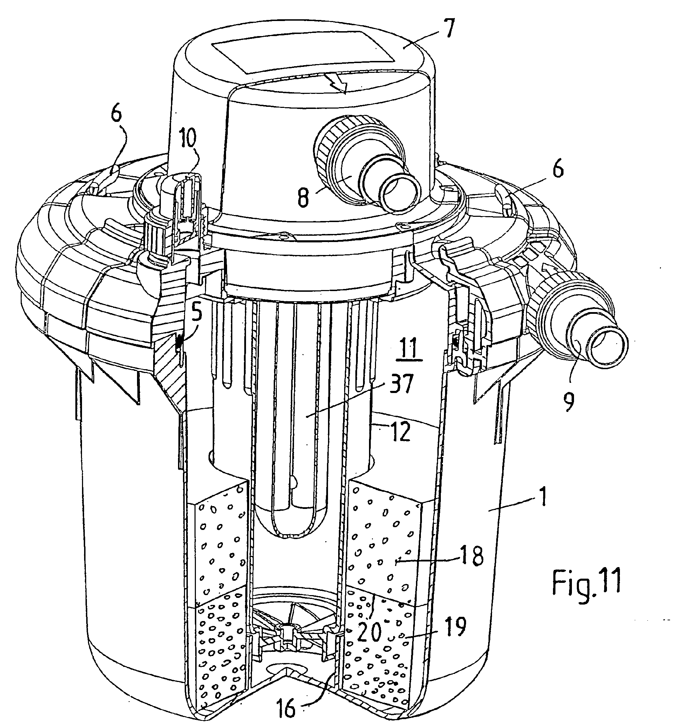

Figure 11 illustrates a modification of Figure 1. The modification involves the inclusion in the central tube 12 of a source 37 of ultra-violet radiation past which the water flows as the water proceeds up the central tube 12. In comparison with Figure 1, the housing 7 of Figure 11 is enlarged to incorporate the means for electrical supply to the ultra-violet source 37. The vanes 15 provide a shield, preventing a user looking directly at the source 37 even if the lid 2 is removed from the assembly (with the tube 12 attached).

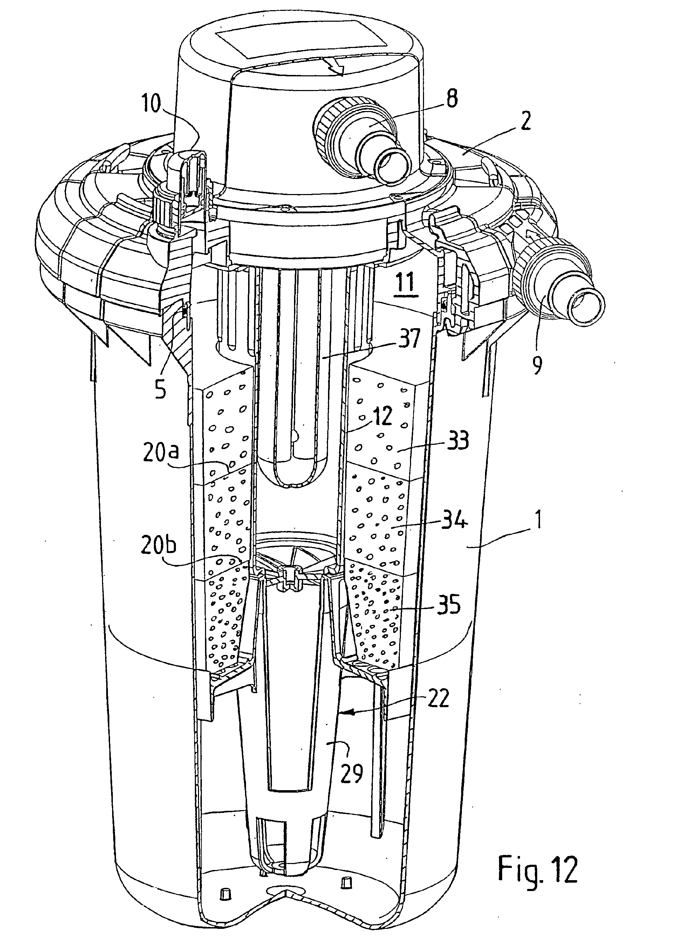

Similarly, Figure 12 represents a modification of the assembly of Figure 6. This modified filter assembly embodies the present invention. In Figure 12 the central tube 12 accommodates a source 37 of ultra-violet radiation past which the water flows as it proceeds up the central tube 12.

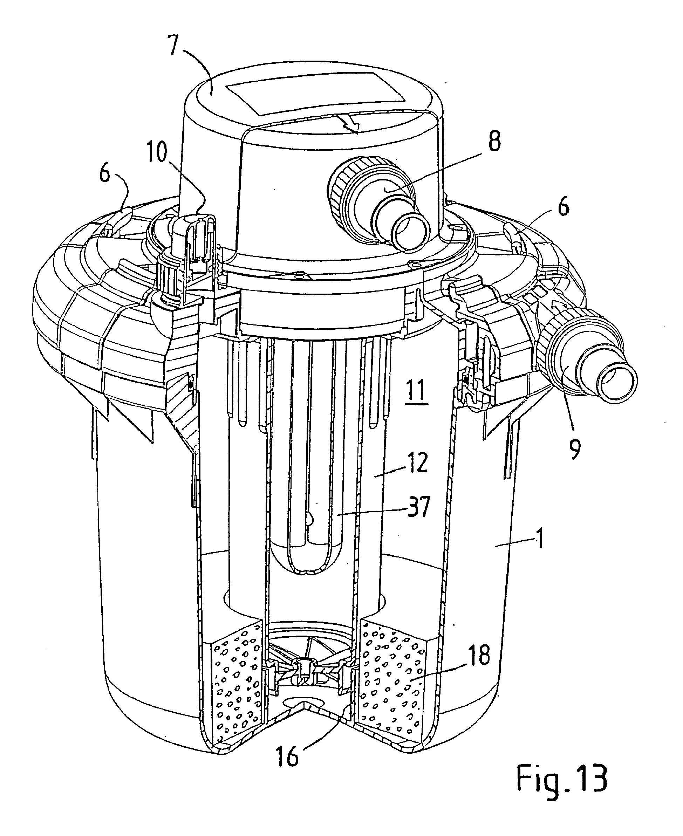

The filter assembly of Figure 13 has a single homogenous annular body 18 of foam: otherwise the filter assembly is identical to the assembly illustrated in Figure 11. In use, the lower regions of the body 18 can become clogged with debris before the upper region of the body 18, so the result is similar to the two-layer assembly of Figure 1. Alternatively, the top layer of the body could become clogged before its lower regions, in which case the body would be compressed to expose the outlet and thus allow water to pass directly into the outlet without travelling through the filter.

In all the described assemblies, the clogging of the filter medium is utilised to reduce the resistance to flow with progressive compression of the filter medium.

## Claims

1. A filter assembly for filtering a flow of water, the assembly comprising a container (1,2) enclosing an inlet chamber (11) with an upstream region and a downstream outlet (17), and a filter medium (18,19,33,34,35) in a water flow path between the upstream region and the downstream outlet (17), wherein the filter medium is elastically compressible, **characterised in that** the inlet chamber (11), filter medium (18,19,33,34,35) and outlet (17) are arranged so that an increase in water pressure in the upstream region as a consequence of clogging of the filter medium causes the filter medium (18,19,33,34,35) to be compressed in a movement relative to the outlet (17) which tends to allow an increase in water flow rate through the outlet (17) so as to counter the reduction in water flow rate caused by the clogging, and **in that** the filter assembly includes a source of ultra-violet radiation to which the flow of water is exposed after passage through the outlet and the assembly includes a compartment, downstream of the outlet and upstream of the ultra-violet source, accommodating plastic granules for attracting bacteria so as to provide biological treatment of the water.

2. A filter assembly according to claim 1, in which the filter medium (18,19,33,34,35) comprises a plurality of bodies (18,19,33,34,35) of open-celled foam material, with the bodies each having a respective predetermined cell size, but the cell size of one body being different from the next with the successive bodies being of decreasing cell size, and therefore decreasing coarseness, in the direction of the water flow path, the bodies and the outlet being arranged so that as clogging progresses the resulting movement of the filter medium (18,19,33,34,35) relative to the outlet causes a greater proportionate area of the coarser foam material (18,34,33) to be presented to the outlet (17).

3. A filter assembly according to claim 2, in which there are two bodies of foam material (18,19; 33,34; 34,35) which abut along an interface (20,20a,20b), the bodies and the outlet being arranged so that the movement of the filter medium on clogging causing this interface (20,20a,20b) to move with respect to the outlet (17) such that progressively more of the coarser foam body is presented to the outlet.

4. A filter assembly according to claim 1, in which the filter medium (18) consists of a homogenous body of open-celled foam material (18) of uniform cell size, the body (18) and outlet (17) being arranged such that the movement of the filter medium on clogging causes progressively increasing compression of the filter medium so that water can pass to the outlet through a portion of the body (18) that offers a lower resistance to the through flow of water than does another portion of the body (18), or directly to the outlet (17) without having been subjected to any significant degree of mechanical filtering.

5. A filter assembly according to any of the preceding claims, in which the inlet chamber is annular, the filter medium is annular and the outlet is formed in a central tubular body surrounded by the filter medium.

6. A filter assembly according to claim 5, in which the tubular body has a plurality of circumferentially spaced slots constituting the outlet.

## Patentansprüche

1. Filteranordnung zum Filtern einer Wasserströmung, wobei die Anordnung einen Behälter (1, 2), der eine Einlasskammer (11) mit einem stromauf gelegenen Bereich und einen stromab gelegenen Auslass (17) umschließt, und ein Filtermedium (18, 19, 33, 34, 35) in einem Wasserströmungsweg zwischen dem stromauf gelegenen Bereich und einen stromab gelegenen Auslass (17) umfasst, wobei das Filtermedium elastisch kompressibel ist, **dadurch gekennzeichnet, dass** die Einlasskammer (11), das Filtermedium (18, 19, 33, 34, 35) und der Auslass (17) so angeordnet sind, dass ein Anstieg des Wasserdrucks in dem stromauf gelegenen Bereich als Folge einer Verstopfung des Filtermediums bewirkt, dass das Filtermedium (18, 19, 33, 34, 35) in einer Bewegung relativ zu dem Auslass (17) komprimiert wird, wodurch es zu einer Zunahme der Wasserdurchflussmenge durch den Auslass (17) kommen kann, so dass der durch die Verstopfung verursachten Verminderung der Wasserdurchflussmenge entgegengewirkt wird, und dass die Filteranordnung eine Ultraviolettstrahlungsquelle umfasst, die auf die Wasserströmung nach dem Durchströmen des Auslasses einwirkt, und die Anordnung stromab des Auslasses und stromauf der Ultraviolettquelle eine Kammer umfasst, in der Kunststoffkörnchen zum Anlocken von Bakterien untergebracht sind, so dass für eine biologische Behandlung des Wassers gesorgt ist.

2. Filteranordnung nach Anspruch 1, wobei das Filtermedium (18, 19, 33, 34, 35) eine Mehrzahl von Körpern (18, 19, 33, 34, 35) aus offenzelligem Schaumstoff umfasst, wobei die Körper jeweils eine jeweilige, vorgegebene Zellengröße aufweisen, sich jedoch die Zellengröße des einen Körpers von dem nächsten unterscheidet und die aufeinander folgenden Körper eine abnehmende Zellengröf3c und deshalb eine abnehmende Grobheit in der Richtung des Wasserströmungsweges aufweisen und die Körper und der Auslass so angeordnet sind, dass beim Fortschreiten der Verstopfung die entstehende Bewegung des Filtermediums (18, 19, 33, 34, 35) relativ zu dem Auslass bewirkt, dass ein größerer proportionaler Bereich des gröberen Schaumstoffs (18,34,33) an dem Auslass (17) vorhanden ist.

3. Filteranordnung nach Anspruch 2, wobei zwei Körper aus Schaumstoff (18, 19; 33, 34; 34, 35) vorhanden sind, die an einer Grenzfläche (20, 20a, 20b) anliegen, und die Körper und der Auslass so angeordnet sind, dass durch die Bewegung des Filtermediums bei einer Verstopfung bewirkt wird, dass sich diese Grenzfläche (20, 20a, 20b) in Bezug auf den Auslass (17) derart bewegt, dass progressiv mehr von dem gröberen Schaumstoffkörper an dem Auslass vorhanden ist.

4. Filteranordnung nach Anspruch 1, wobei das Filtermedium (18) aus einem homogenen Körper aus offenzelligem Schaumstoff (18) mit einheitlicher Zellengröße besteht, und der Körper (18) und der Auslass (17) derart angeordnet sind, dass durch die Bewegung des Filtermediums bei einer Verstopfung bewirkt wird, dass das Filtermedium zunehmend progressiv komprimiert wird, so dass Wasser durch einen Abschnitt des Körpers (18) hindurch, der einen geringeren Widerstand gegen das Hindurchströmen von Wasser als ein anderer Abschnitt des Körpers (18) aufweist, zu dem Auslass laufen oder direkt zu dem Auslass (17) laufen kann, ohne einem sehr hohen Grad der mechanischen Filterung unterworfen worden zu sein.

5. Filteranordnung nach einem der vorhergehenden Ansprüche, wobei die Einlasskammer ringförmig ist, das Filtermedium ringförmig ist und der Auslass in einem mittigen, , von dem Filtermedium umgebenen rohrförmigen Körper ausgebildet ist.

6. Filteranordnung nach Anspruch 5, wobei der rohrförmige Körper eine Mehrzahl von am Umfang beabstandeten, den Auslass bildenden Schlitzen aufweist.

## Revendications

1. Ensemble filtre destiné à filtrer un écoulement d'eau, l'ensemble comportant un récipient (1, 2) renfermant une chambre (11) d'entrée dotée d'une région amont et d'une sortie (17) en aval, et un milieu filtrant (18, 19, 33, 34, 35) sur un trajet d'écoulement de l'eau entre la région amont et la sortie (17) en aval, le milieu filtrant étant élastiquement compressible, **caractérisé en ce que** la chambre (11) d'entrée, le milieu filtrant (18, 19, 33, 34, 35) et la sortie (17) sont disposés de telle sorte qu'une augmentation de la pression d'eau dans la région amont résultant d'un colmatage du milieu filtrant provoque la compression du milieu filtrant (18, 19, 33, 34, 35) dans un mouvement par rapport à la sortie (17) qui tend à permettre une augmentation du débit d'eau à travers la sortie (17) de façon à s'opposer à la réduction du débit d'eau provoquée par le colmatage, et **en ce que** l'ensemble filtre comprend une source de rayonnement ultraviolet à laquelle est exposé l'écoulement d'eau après son passage à travers la sortie et **en ce que** l'ensemble comprend un compartiment, en aval de la sortie et en amont de la source ultraviolette, logeant des granulés de plastique destinés à attirer les bactéries de façon à assurer un traitement biologique de l'eau.

2. Ensemble filtre selon la revendication 1, dans lequel le milieu filtrant (18, 19, 33, 34, 35) comporte une pluralité de corps (18, 19, 33, 34, 35) en matériau de mousse à cellules ouvertes, les corps présentant chacun une taille de cellules respective prédéterminée, mais la taille de cellules d'un corps étant différente de la suivante, les corps successifs présentant une taille de cellules décroissante, et donc un grain décroissant, dans la direction du trajet d'écoulement de l'eau, les corps et la sortie étant disposés de telle sorte qu'à mesure que le colmatage progresse, le mouvement résultant du milieu filtrant (18, 19, 33, 34, 35) par rapport à la sortie fait qu'une plus grande proportion d'aire du matériau (18, 34, 33) de mousse à plus gros grain est présentée à la sortie (17).

3. Ensemble filtre selon la revendication 2, dans lequel il existe deux corps de matériau en mousse (18, 19 ; 33, 34 ; 34, 35) en appui mutuel le long d'une interface (20, 20a, 20b), les corps et la sortie étant disposés de telle sorte que le mouvement du milieu filtrant suite au colmatage amène cette interface (20, 20a, 20b) à se déplacer par rapport à la sortie (17) de telle sorte qu'une plus grande partie du corps en mousse à plus gros grain est progressivement présentée à la sortie.

4. Ensemble filtre selon la revendication 1, dans lequel le milieu filtrant (18) consiste en un corps homogène (18) en matériau de mousse à cellules ouvertes présentant une taille de cellules uniforme, le corps (18) et la sortie (17) étant disposés de telle sorte que le mouvement du milieu filtrant suite au colmatage provoque une compression progressivement croissante du milieu filtrant de telle sorte que de l'eau puisse passer vers la sortie à travers une partie du corps (18) qui présente une moindre résistance à l'écoulement traversant de l'eau que celle d'une autre partie du corps (18), ou directement vers la sortie (17) sans avoir été soumise à un degré significatif de filtration mécanique.

5. Ensemble filtre selon l'une quelconque des revendications précédentes, dans lequel la chambre d'entrée est annulaire, le milieu filtrant est annulaire et la sortie est formée dans un corps central tubulaire entouré par le milieu filtrant.

6. Ensemble filtre selon la revendication 5, dans lequel le corps tubulaire présente une pluralité de fentes espacées circonférentiellement constituant la sortie.
